# EUROPÄISCHE PATENTANMELDUNG

(11) **EP 2 765 315 A2**
(43) Veröffentlichungstag der Anmeldung: **13.08.2014**
(21) Anmeldenummer: 14401022.0
(22) Anmeldetag: 06.02.2014
(51) Int. Cl.: F16B 5/01, F16B 15/00, F16B 19/00

(54) **Befestigungsmittel und Befestigungsanordnung**

(30) Priorität: 11.02.2013 DE 102013101297
(71) Anmelder: fischerwerke GmbH & Co. KG, 72178 Waldachtal (DE)
(72) Erfinder: Kempf, Christian, 72406 Bisingen (DE); Linka, Martin, 72160 Horb a.N. (DE)

(57) **Zusammenfassung**

Die Erfindung betrifft ein Befestigungsmittel (1) mit einem Nagel (2), auf dem eine elastische, schlauchförmige Hülle (3) angeordnet ist. Der Nagel (2) weist widerhakenartige Halter (8) auf, die ein vorderes Ende der Hülle (3) halten, so dass die elastische Hülle (3) bei einem Einschlagen in eine Platte (13) gedehnt und durch ein Loch (15) in der Platte (13) gezogen wird. Beim Versuch, den Nagel (2) herauszuziehen, wird die elastische Hülle (3) gestaucht und baucht sich auf einer Rückseite der Platte (13) aus, so dass das Befestigungsmittel (1) formschlüssig in der Platte (13) gehalten ist.

## Beschreibung

Die Erfindung betrifft ein Befestigungsmittel mit den Merkmalen des Oberbegriffs des Anspruchs 1 sowie eine Anordnung mit dem in einem Loch in einer Platte befestigten Befestigungsmittel mit den Merkmalen des Oberbegriffs des Anspruchs 10. Die Platte kann beispielsweise auch eine Deckschicht einer Waben- oder einer Schichtverbundplatte sein, die eine Wabenstruktur oder beispielsweise einen Schaumkern zwischen zwei Deckschichten aufweist. Die Befestigung erfolgt von einer Seite, die hier auch als Vorderseite bezeichnet wird; eine abgewandte Seite der Platte, die hier auch als Rückseite bezeichnet wird, muss für die Befestigung nicht zugänglich sein.

Die Auslegeschrift DE 1 284 169 offenbart ein Befestigungsmittel mit einem Nagel, auf dem ein elastischer Schlauch als Hülle angeordnet ist. Der Nagel weist zwei umlaufende Rillen an einem eine Spitze aufweisenden Ende, das hier als "vorderes Ende" bezeichnet wird, auf, die durch eine konische Ringfläche voneinander getrennt sind, die sich von der Spitze des Nagels weg in Richtung eines hinteren, einen Nagelkopf aufweisenden Endes des Nagels erweitert. Der Schlauch verjüngt sich an einem vorderen Ende im Achsschnitt viertelkreisbogenförmig und greift in ungesetztem Zustand mit diesem Ende in die vordere der beiden Rillen ein. Zwischen der zweiten Rille und dem Kopf am hinteren Ende des Nagels weist der Nagel einen glattwandigen Schaft auf, auf dem der die Hülle bildende elastische Schlauch verschiebbar ist. An einem hinteren Ende weist der Schlauch einen rohrförmigen Kragen auf, dessen Außendurchmesser größer als ein Außendurchmesser des Schlauchs ist. Zur Befestigung wird das bekannte Befestigungsmittel in ein Loch in beispielsweise einem Karosserieblech eingebracht, dessen Durchmesser etwas kleiner als ein Außendurchmesser des Schlauchs auf dem Schaft des Nagels ist. Spätestens, wenn der nach außen über den Schlauch vorstehende Kragen am hinteren Ende des Schlauchs auf dem Karosserieblech aufsitzt, zieht er den Schlauch auf dem Schaft des Nagels und zieht dabei den vorderen, nach innen gewölbten Rand des Schlauchs zunächst aus der ersten Rille über die konische Ringfläche in die zweite Rille und anschließend aus der zweiten Rille heraus auf den glattwandigen Teil des Schafts des Nagels. Dabei wird die Öffnung am vorderen Ende des Schlauchs auf den Durchmesser des glattwandigen Schafts des Nagels aufgeweitet, wodurch sich die Wölbung wulstartig umlaufend nach außen formt. Gegen Herausziehen aus dem Loch im Karosserieblech hält der Nagel des bekannten Befestigungsmittels durch Reibung und durch eine Einschnürung eines Randes des Lochs im Karosserieblech, dessen Durchmesser kleiner als ein Außendurchmesser des Schlauchs ist, in den Schlauch und durch Reibung, d.h. kraftschlüssig.

Die Offenlegungsschrift DE 10 2009 011 138 A1 offenbart ein Befestigungsmittel mit einem Nagel, auf dem ebenfalls ein elastischer Schlauch angeordnet ist. An einem vorderen Ende verjüngt sich der Schlauch konisch, ist geschlossen und umhüllt eine ebenso konische Spitze des Nagels, an deren Form er angepasst ist. Ein Schaft des Nagels weist umlaufende oder in Längsrichtung verlaufende Rippen oder ein Gewinde auf, das den Schlauch axial auf dem Schaft des Nagels hält. Dieses bekannte Befestigungselement wird in ein Loch beispielsweise in einer Wand eingetrieben und hält durch Reibschluss. Zusätzlich drücken sich die Rippen oder das Gewinde des Nagels in den Schlauch ein, so dass auf der Innenseite des Schlauchs auch ein Formschluss zwischen dem Nagel und dem Schlauch besteht.

Aufgabe der Erfindung ist, ein Befestigungsmittel der vorstehend erläuterten Art vorzuschlagen, dessen Halt gegen Herausziehen aus einem Loch in einer Platte erhöht ist.

Diese Aufgabe wird durch die Merkmale der Ansprüche 1 und 10 gelöst. Das erfindungsgemäße Befestigungsmittel weist einen Schaft und eine auf dem Schaft angeordnete verformbare, insbesondere elastische Hülle, beispielsweise einen Schlauch, auf. Außerdem weist der Schaft einen Halter für die Hülle auf, der die Hülle gegen Verschieben auf dem Schaft hält. Der Halter ist vorzugsweise an oder nahe einem Ende des Schafts bzw. der Hülle angeordnet, mit dem voraus das Befestigungsmittel zur Befestigung in ein Loch in beispielsweise einer Platte eingebracht wird. In befestigtem Zustand befindet sich der Halter auf einer Rückseite der Platte vorzugsweise mit Abstand von der Platte. Der Halter muss die Hülle so fest halten, dass sie beim Durchtritt durch das Loch nicht vom Halter gezogen wird, sondern auf dem Halter bleibt; ein absolut fester Halt der Hülle auf dem Halter des Schafts ist nicht notwendig. Neben bzw. außerhalb des Halters ist die Hülle auf dem Schaft des Befestigungsmittels verschiebbar. Beim Einbringen des Befestigungsmittels in ein Loch in einer Platte, das kleiner als ein Außenumfang der Hülle auf dem Schaft, aber größer als ein Außenumfang des Schafts ist, zieht der Halter die Hülle durch das Loch in der Platte durch. Die Hülle wird auf Zug beansprucht, d.h. sie wird gestreckt, verkleinert dadurch ihren Außenumfang, so dass sich die Hülle durch bzw. in das Loch ziehen lässt. Wird das Befestigungsmittel anschließend entgegen der Einbringrichtung beaufschlagt, wird die Hülle zwischen der Rückseite der Platte und dem Halter des Schafts des Befestigungsmittels gestaucht, wodurch sie zwischen der Platte und dem Halter ausbaucht, d.h. ihren Außenumfang vergrößert und beispielsweise einen umlaufenden Wulst bildet. Das bewirkt einen formschlüssigen Hintergriff der Platte durch die Hülle des Befestigungsmittels, die dadurch den Schaft über den Halter im Loch in der Platte hält.

Durch das Strecken der verformbaren Hülle beim Einbringen des Befestigungsmittels in ein Loch in einer Platte, das einen Außenumfang der Hülle verkleinert, lässt sich das Befestigungsmittel mit vergleichsweise geringer Kraft in ein Loch in einer Platte einbringen. Ein Stauchen und Ausbauchen der Hülle auf einer Vorderseite der Platte beim Einbringen des Befestigungsmittels in das Loch in der Platte, das das Einbringen erschweren würde, wird durch die Erfindung vermieden.

Bei einer Beaufschlagung des in ein Loch in einer Platte eingebrachten erfindungsgemäßen Befestigungsmittels wird die verformbare Hülle gestaucht, vergößert dadurch ihren Außenumfang und hintergreift die Platte, wobei sich der Hintergriff mit steigender Beaufschlagung vergrößert, so dass das Befestigungsmittel einen guten Halt im Loch in der Platte gegen Herausziehen aufweist. Das Befestigungsmittel lässt sich an sich nur durch Zerstören, nämlich Abscheren der Hülle oder Abreißen des Schafts, aus dem Loch in der Platte entfernen.

Das erfindungsgemäße Befestigungsmittel kann einen an beiden Enden offenen, verformbaren, insbesondere elastischen Schlauch als Hülle aufweisen, der über seine gesamte Länge einen gleichbleibenden Querschnitt aufweist. Es wird also kein spezieller Schlauch benötigt. Der Schlauch kann Löcher aufweisen. Denkbar, wenn auch nicht bevorzugt, ist ein Sieb- oder Gewebeschlauch oder dgl. als Hülle.

Eine Ausgestaltung der Erfindung sieht ein Widerhakenprofil als Halter für die Hülle vor, beispielsweise ein Sägezahnprofil bzw. eine umlaufende, konische Ringfläche. Das Widerhakenprofil ist dem vorderen Ende des Befestigungsmittels zugewandt, d.h. es ist so ausgerichtet, dass es die Hülle beim Durchziehen durch ein Loch in einer Platte gegen Verschieben auf dem Schaft hält. In entgegengesetzter Richtung kann die Hülle vom Halter abziehbar sein.

Vorzugsweise ist der Schaft neben bzw. außerhalb des Halters glattwandig, so dass die Hülle neben bzw. außerhalb des Halters auf dem Schaft des Befestigungsmittels verschiebbar ist. Das ermöglicht das bereits beschriebene Dehnen der Hülle beim Einziehen in bzw. Durchziehen durch ein Loch in einer Platte, wobei sich durch die Dehnung ein Außenumfang der Hülle verkleinert, was das Einbringen des Befestigungsmittels in das Loch in der Platte ermöglicht bzw. erleichtert.

Eine bevorzugte Ausgestaltung der Erfindung sieht ein Widerlager für die Hülle am Schaft des Befestigungsmittels vor, das mit Abstand vom Halter angeordnet und dem Halter zugewandt ist. Das Widerlager kann beispielsweise eine Stirnfläche einer Ringstufe oder ein Flansch sein. Zwischen dem Widerlager und dem Halter ist die Hülle auf dem Schaft verschiebbar. Das Widerlager steht nach außen über die Hülle über und hält das Befestigungsmittel gegen Durchdrücken durch die Platte.

Eine Ausgestaltung der Erfindung sieht eine Aufweitung der Hülle mit Abstand vom Halter vor. Die Aufweitung hat beispielsweise ebenfalls die Form eines Flanschs und befindet sich vergleichbar einer Unterlegscheibe am Widerlager des Schafts. Die Aufweitung der Hülle bildet eine Zwischenlage zwischen dem Widerlager des Schafts und der Platte und vermeidet einen direkten Kontakt zwischen dem Widerlager des Schafts und der Platte. Aufgrund der Verformbarkeit werden Schall und Vibrationen gedämpft.

Vorzugsweise ist am Schaft eine Spitze angeordnet. Die Spitze ist insbesondere einstückig mit dem Schaft. In dem Bereich des Schafts, in dem die Hülle verschieblich ist, ist der Durchmesser des Schafts geringer als der Durchmesser der Spitze, wobei der maximale Durchmesser der Spitze gemeint ist. Hierdurch wird erreicht, dass die Hülle zumindest teilweise im "Schatten" der Spitze beim Eintreiben des Nagels ist und somit vor zu großen Abscherkräften bewahrt wird. Auch kann die Spitze so die Hülle gegen ein Abziehen in Richtung der Spitze abstützen. Nicht zwingend, aber vorzugsweise ist außerdem der Durchmesser der Spitze geringer als der maximale Außendurchmesser der Hülle. Die Hülle überragt also in radialer Richtung die Spitze. Durch den großen Durchmesser wird erreicht, dass die Spitze kein zu großes Loch in der Platte erzeugt und die Hülle auf jeden Fall beim Eintreten etwas radial gestaucht wird und somit die Platte hintergreift.

Die Anordnung gemäß Anspruch 10 ist mit vorstehenden Erläuterungen des erfindungsgemäßen Befestigungsmittels bereits erläutert worden.

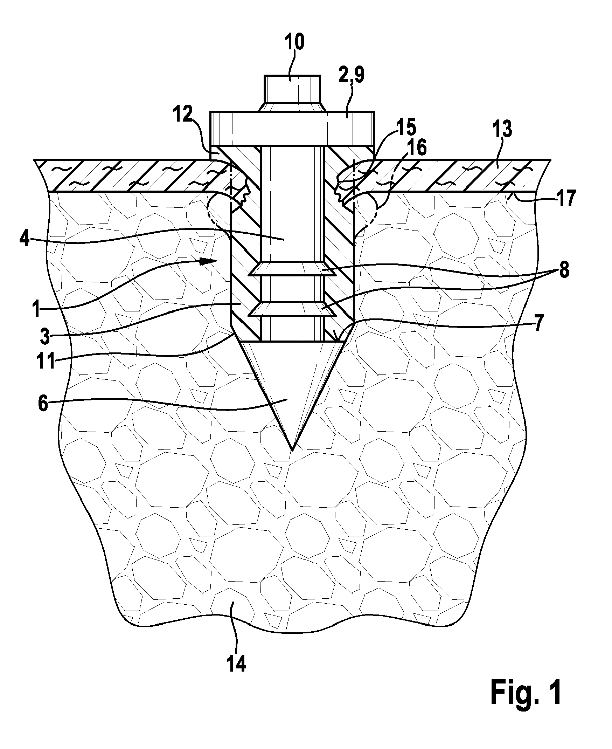

Die Erfindung wird nachfolgend anhand eines in der Zeichnung dargestellten Ausführungsbeispiels näher erläutert. Die einzige Figur zeigt eine Anordnung mit einem Befestigungsmittel gemäß der Erfindung in einer Schnittdarstellung.

Das in der Zeichnung dargestellte, erfindungsgemäße Befestigungsmittel 1 weist einen Nagel 2 aus beispielsweise Stahl und eine elastische Hülle 3 aus einem Elastomer auf, die auf einem Schaft 4 des Nagels 2 angeordnet ist.

Der Nagel 2 weist eine konische Spitze 6 an einem Ende, das hier als "vorderes Ende" bezeichnet wird, auf. An einem durchmesser-größeren, hinteren Ende verjüngt sich die konische Spitze 6 mit einer radialen Ringstufe 7 auf einen Durchmesser des sich einstückig anschließenden, zylindrischen Schafts 4. In kurzen Abständen hinter der Spitze 6 weist der Schaft 4 zwei Halter 8 für die Hülle 3 auf. In der dargestellten Ausführungsform sind die Halter 8 umlaufende konische Ringflächen, die sich in Richtung des vorderen Endes des Nagels 2, d.h. in Richtung der Spitze 6 aufweiten. Die Halter 8 können auch als Widerhakenprofile oder als Sägezahnprofile aufgefasst werden. Die Bezeichnung der Abstände als "kurz" bezieht sich auf ein Verhältnis zum Durchmesser des Schafts 4 oder auch zu einer Gesamtlänge oder einer Länge des Schafts 4 hinter den Haltern 8, also auf einer der Spitze 6 abgewandten Seite der Halter 8. Hinter den Haltern 8 ist der Schaft 4 glattwandig und erstreckt sich bis zu einem Flansch 9. Der Durchmesser des Schafts 4 ist in diesem Bereich kleiner als der maximale Durchmesser der Spitze 6. Der glattwandige Abschnitt des Schafts 4 zwischen dem hinteren Halter 8 und dem Flansch 9 ist in der dargestellten Ausführungsform der Erfindung länger als ein Abstand des hinteren Halters 8 von der Ringstufe 7 am hinteren Ende der Spitze 6 des Nagels 2. Allerdings sind die Längenverhältnisse und allgemein die geometrischen Verhältnisse des Nagels 2 und des Befestigungsmittels 1 nicht zwingend für die Erfindung und können bei Ausführungsformen abweichend gewählt sein.

An einem hinteren, der Spitze 6 abgewandten Ende des Flanschs 9 weist der Nagel 2 einen Zapfen 10 auf. Der Flansch 9 und der Zapfen 10 befinden sich an einem Ende des Nagels 2, das hier als "hinteres Ende" bezeichnet wird. Der Flansch 9 des Nagels 2 bildet ein Widerlager für das hintere Ende der Hülle 3, das mit Abstand vom Halter 8 angeordnet ist. Auf dem glattwandigen Schaft 4 zwischen dem hinteren Halter 8 und dem das Widerlager bildenden Flansch 9 ist die elastische Hülle 3 auf dem Schaft 4 verschieblich.

Die auf dem Schaft 4 des Nagels 2 angeordnete elastische Hülle 3 ist ein hohlzylindrischer Schlauch mit einer konischen Fase 11 an einem vorderen Ende, mit dem sie sich bündig und durchmessergleich an eine Konusfläche der Spitze 6 des Nagels 2 anschließt. Der zylindrische Teil der Hülle 3 ist somit größer im Durchmesser als die Spitze 6. Am hinteren Ende weist die Hülle 3 einen Flansch 12 auf, der vergleichbar einer Unterlegscheibe an einer der Spitze 6 zugewandten Vorderseite des Flanschs 9 des Nagels 2 anliegt. Der Flansch 12 der Hülle 3 kann allgemein auch als Aufweitung der Hülle 3 aufgefasst werden. Die Hülle 3 erstreckt sich von der Ringstufe 7 am hinteren Ende der Spitze 6 des Nagels 2 bis zum Flansch 9 des Nagels 2.

Die widerhakenartigen Halter 8 formen sich von innen in die Hülle 3 ein und halten die Hülle 3 in deren vorderem Bereich gegen Verschieben auf dem Schaft 4. Zwischen dem hinteren Halter 8 und dem Flansch 9 des Nagels 2 ist die Hülle 3 aufgrund ihrer Elastizität und aufgrund der Glattwandigkeit des Schafts 4 in diesem Abschnitt auf dem Schaft 4 verschiebbar.

Zur Befestigung an oder in einer Platte 13 wird das erfindungsgemäße Befestigungsmittel 1 beispielsweise mit Hammerschlägen oder einem Schubgerät mit der Spitze 6 voraus in die Platte 13 eingetrieben. Ein Vorbohren ist normalerweise nicht erforderlich. In der dargestellten Ausführungsform ist die Platte 13 eine Deckschicht aus beispielsweise faserverstärktem Kunststoff einer Schichtverbundplatte mit einem Schaumkern 14. Die Platte 13 kann beispielsweise auch eine Deckschicht einer nicht dargestellten Wabenplatte sein, deren Kern eine Wabenstruktur aufweist. In gleicher Weise ist auch die Befestigung des Befestigungsmittels 1 an einem Karosserieblech oder dgl. als Platte möglich (nicht dargestellt). Zur Befestigung genügt eine einseitige Zugänglichkeit, eine Rückseite 17 der Platte 13 muss nicht zugänglich sein. Beim Einschlagen oder allgemein Eintreiben des Nagels 2 in die Platte 13 durchdringt die Spitze 6 des Nagels 2 die Platte 13 und verursacht ein Loch 15 in der Platte 13. Der Nagel 2 wird so weit in die Platte 13 eingeschlagen, bis der Flansch 12 der Hülle 3 an der Platte 13 anliegt. Die Halter 8 halten die elastische Hülle 3 in ihrem vorderen Bereich beim Durchtritt durch das Loch 15 in der Platte 13 gegen Verschieben auf dem Schaft 4 des Nagels 2. Infolgedessen wird die Hülle 3 beim Durchtritt durch das Loch 15 in der Platte 13 axial gedehnt und verkleinert dabei ihren Außendurchmesser. Ein Ausbauchen oder Aufweiten der Hülle 3 vor der Platte 13, d.h. auf einer Vorder- oder Außenseite der Platte 13, das einen Durchtritt durch die Platte 13 verhindern oder jedenfalls erschweren würde, wird vermieden.

Aufgrund eines größeren Außendurchmessers der Hülle 3 als eines Durchmessers der Spitze 6 des Nagels 2 am hinteren, durchmesser-größeren Ende der Spitze 6 und/oder weil sich ein Rand des Lochs 15 in der Platte 13 aufgrund einer Elastizität der Platte 13 nach dem Durchtritt der Spitze 6 wieder etwas verkleinert, formt sich ein Rand des Lochs 15 der Platte 13 nach Art einer Einschnürung in die elastische Hülle 3 ein, wie es in der Zeichnung zu sehen ist. In unverformtem Zustand ist die Hülle 3 bis zu ihrem Flansch 12 an ihrem hinteren Ende zylindrisch, wie mit Strichpunktlinien gezeichnet.

Wird eine Zugkraft auf den Nagel 2 ausgeübt, die im Sinne eines Herausziehens des Nagels 2 und des Befestigungsmittels 1 insgesamt aus der Platte 13 wirkt, wird die elastische Hülle 3, deren vorderes Ende sich an der Ringstufe 7 am hinteren Ende der Spitze 6 des Nagels 2 abstützt, axial gestaucht. Durch das Stauchen weitet sich die Hülle 3 auf, es bildet sich ein umlaufender Wulst 16 an der Rück- oder Innenseite 17 der Platte 13, wie er mit Strichzweipunktlinien in der Zeichnung dargestellt ist. Der Wulst 16 hält das Befestigungsmittel 1 durch Formschluss gegen Herausziehen in der Platte 13. Erhöht sich die auf den Nagel 2 ausgeübte Zugkraft, vergrößert sich der Wulst 16 der Hülle 3, weswegen sich das Befestigungsmittel 1 nicht durch Erhöhen der auf den Nagel 2 ausgeübten Zugkraft aus der Platte 13 herausziehen lässt. Ein Herausziehen ist nur durch Zerstören der Hülle 3, d.h. ein Abscheren des Wulsts 16, und/oder ein Zerstören der Platte 13 im Bereich des Lochs 15 denkbar.

Zur Befestigung eines nicht dargestellten Gegenstands kann der Zapfen 10 ein nicht dargestelltes Außengewinde oder der Nagel 2 ein nicht dargestelltes Innengewinde in seinem hinteren Ende aufweisen. In letzterem Fall ist der Zapfen 10 entbehrlich. Der Zapfen 10 kann auch als Nietzapfen zur Befestigung eines nicht dargestellten Gegenstands durch Nieten verwendet werden.

Die elastische Hülle 3 und ihr ebenso elastischer Flansch 12 am hinteren Ende der Hülle 3, der sich zwischen der Platte 13 und dem Flansch 9 des Nagels 2 befindet, verhindern einen unmittelbaren Kontakt des Nagels 2 einschließlich seines Flanschs 9 an der Platte 13, eine Übertragung etwaiger Vibrationen und/oder Schall zwischen der Platte 13 und dem Nagel 2 werden gedämpft. Möglich ist auch die Befestigung eines nicht dargestellten Gegenstands, der ein Loch aufweist, indem das Befestigungsmittel 1 in dem Loch in dem nicht dargestellten Gegenstand durchgesteckt und anschließend in beschriebener Weise in die Platte 13 eingetrieben wird. Für eine solche Befestigung können erforderlichenfalls der Schaft 4 und die Hülle 3 entsprechend der Dicke des zu befestigenden Gegenstands verlängert ausgeführt sein. Diese Art der Befestigung, die auch als Durchsteckmontage aufgefasst werden kann, erspart die separate Befestigung des Gegenstands am hinteren Ende des Befestigungsmittels 1, hat allerdings den Nachteil, dass der zu befestigende Gegenstand unmittelbar an der Platte 13 anliegt. Zu Dämpfungszwecken kann eine nicht dargestellte, elastische Unterlage zwischen den Gegenstand und die Platte 13 gelegt werden.

Außer dem erfindungsgemäßen Befestigungsmittel 1 selbst zeigt die Zeichnung auch eine Anordnung mit dem Befestigungsmittel 1, das in erfindungsgemäßer Weise an bzw. in der Platte 13 befestigt ist. Durchmesser beispielsweise der Hülle 3 des Schafts 4, der Spitze 6 und des Lochs 15 in der Platte 13 können verallgemeinernd auch als Querschnitte aufgefasst werden, insbesondere wenn sie nicht kreisrund sind.

### Bezugszeichenliste

- 1: Befestigungsmittel
- 2: Nagel
- 3: Hülle
- 4: Schaft
- *5*: *nicht vergeben*
- 6: Spitze
- 7: Ringstufe
- 8: Halter
- 9: Flansch
- 10: Zapfen
- 11: Fase
- 12: Flansch
- 13: Platte
- 14: Schaumkern
- 15: Loch
- 16: Wulst
- 17: Rückseite

## Patentansprüche

1. Befestigungsmittel zur Befestigung in einem Loch (15) in einer Platte (13), mit einem Schaft (4), auf dem eine verformbare Hülle (3) angeordnet ist, wobei der Schaft (4) einen Halter (8) für die Hülle (3) aufweist, der die Hülle (3) gegen Verschieben auf dem Schaft (4) hält, **dadurch gekennzeichnet, dass** die Hülle (3) neben dem Halter (8) auf dem Schaft (4) verschieblich ist.

2. Befestigungsmittel nach Anspruch 1, **dadurch gekennzeichnet, dass** der Halter (8) an oder nahe an einem Ende der Hülle (3) angeordnet ist.

3. Befestigungsmittel nach Anspruch 1 oder 2, **dadurch gekennzeichnet, dass** der Halter (8) ein offenes Ende der Hülle (3) hält.

4. Befestigungsmittel nach einem der Ansprüche 1-3, **dadurch gekennzeichnet, dass** der Halter (8) ein Widerhakenprofil aufweist.

5. Befestigungsmittel nach einem der vorhergehenden Ansprüche, **dadurch gekennzeichnet, dass** der Schaft (4) neben dem Halter (8) glatt ist.

6. Befestigungsmittel nach einem der vorhergehenden Ansprüche, **dadurch gekennzeichnet, dass** das Befestigungsmittel (1) ein Widerlager (9) am Schaft (4) aufweist, das mit Abstand von dem Halter (8) angeordnet und dem Halter (8) zugewandt ist und dass die Hülle (3) zwischen dem Halter (8) und dem Widerlager (9) auf dem Schaft (4) verschieblich ist.

7. Befestigungsmittel nach einem der vorhergehenden Ansprüche, **dadurch gekennzeichnet, dass** die Hülle (3) schlauchartig ist.

8. Befestigungsmittel nach einem der vorhergehenden Ansprüche, **dadurch gekennzeichnet, dass** die Hülle (3) eine Aufweitung (12) mit Abstand vom Halter (8) aufweist.

9. Befestigungsmittel nach einem der vorhergehenden Ansprüche, **dadurch gekennzeichnet, dass** am Schaft (4) eine Spitze (6) angeordnet ist, dass der Schaft (4) im Bereich, in dem die Hülle (3) verschieblich angeordnet ist, im Durchmesser reduziert ist gegenüber der Spitze (6) und dass die Hülle (3) die Spitze im Durchmesser überragt.

10. Anordnung mit einem Befestigungsmittel (1), das einen Schaft (4) und eine auf dem Schaft (4) angeordnete verformbare Hülle (3) aufweist, wobei der Schaft (4) einen Halter (8) für die Hülle (3) aufweist, der die Hülle (3) gegen Verschieben auf dem Schaft (4) hält, wobei der Schaft (4) und die Hülle (3) des Befestigungsmittels (1) ein Loch (15) in einer Platte (13) durchsetzen, **dadurch gekennzeichnet, dass** die Hülle (4) in einem die Platte (13) durchsetzenden Abschnitt neben dem Halter (8) auf dem Schaft (4) verschieblich ist, dass das Loch (15) in der Platte (13) größer als ein Querschnitt des Schafts (4) und des Halters (8) und kleiner als ein Außenumfang der unverformten Hülle (3) auf dem Schaft (4) ist, so dass bei einer Bewegung des Befestigungsmittels (1) in dem Loch (15) in der Platte (13) mit dem Halter (8) in Richtung der Platte (13) die Hülle (3) zwischen der Platte (13) und dem Halter (8) gestaucht wird und sich zwischen der Platte (13) und dem Halter (8) ausbaucht.
